# EUROPÄISCHE PATENTSCHRIFT

(11) **EP 2 719 597 B1**
(45) Veröffentlichungstag und Bekanntmachung des Hinweises auf die Patenterteilung: **30.05.2018**
(21) Anmeldenummer: 13183358.4
(22) Anmeldetag: 06.09.2013
(51) Int. Cl.: B60T 17/22, B60T 8/88, B60T 8/40, B60T 13/66

(54) **Verfahren zur Steuerung eines Bremssystems**
Method for actuating a braking system
Procédé de commande d'un système de freinage

(30) Priorität: 12.10.2012 DE 102012020010
(43) Veröffentlichungstag der Anmeldung: 16.04.2014
(73) Patentinhaber: Volkswagen Aktiengesellschaft, 38440 Wolfsburg (DE)
(72) Erfinder: Witte, Bastian, 38108 Braunschweig (DE)

(56) Entgegenhaltungen:
- WO-A1-2010/115646
- DE-A1- 4 405 672

## Beschreibung

Die Erfindung betrifft ein Verfahren zur Steuerung eines mit einem Bremskraftverstärker ausgestatteten Bremssystems eines Kraftfahrzeugs, bei dem das Antriebsmoment und/oder die Stellposition, insbesondere die Winkelstellung des Antriebs des Bremskraftverstärkers sowie der so erzeugte Druck in dem Bremskreis des Bremssystems erfasst werden und durch eine vergleichende Betrachtung, insbesondere unter Berücksichtigung in einer Datenbank abgelegter Werte, auf eine Leckage in dem Bremskreis geschlossen werden kann.

Derartige Bremssysteme mit einem elektromechanischen Bremskraftverstärker, bei welchen eine Unterstützungskraft durch einen elektrischen Antrieb zusätzlich zu einem durch einen Fahrer mittels eines Bremspedals über eine durchgehend mechanische Verbindung vorgegebenen Bremswunsch aufgebracht wird, sind bereits in der Praxis bekannt und zählen somit durch offenkundige Vorbenutzung zum Stand der Technik.

So offenbart beispielsweise die DE 103 27 553 A1 einen elektromechanischen Bremskraftverstärker, umfassend eine Kolbenstange zur direkten Verbindung eines Bremspedals mit einem Kolben eines Hauptbremszylinders, einen elektrischen Motor mit einem Stator und einem Rotor, die konzentrisch um die Kolbenstange angeordnet sind, und einen Spindeltrieb mit einer drehfest gelagerten, axial bewegbaren Spindelschraube, welche über den Rotor des Motors angetrieben ist und bei Aktivierung des Motors zur Bremskraftverstärkung gegen einen Mitnehmer anläuft und diesen in Richtung des Hauptbremszylinders drückt. Dabei ist im Falle einer Regelung des Bremskraftverstärkers neben einem Sensor zum Erfassen der an der Kolbenstange wirksamen Pedalkraft ein Sensor zum Erfassen der Ist-Summenkraft aus der Pedalkraft und der Verstärkungskraft vorgesehen.

Die DE 10 2005 024 577 A1 betrifft eine Vorrichtung und ein Verfahren zur elektromechanischen Bremsunterstützung von Fahrzeugen, umfassend ein durch einen Fahrer beeinflussbares Eingabemittel, das mit mindestens einem Bremszylinder antreibend verbunden ist, sowie eine elektrische Stelleinrichtung, die zur Betätigung des mindestens einen Bremszylinders in mindestens einer Richtung vorgesehen ist, wobei in mindestens einem Rechenmittel eine Unterstützungskraft ermittelbar ist und die Unterstützungskraft durch die elektrische Stelleinrichtung aufbringbar ist. Um Fehlereinflüsse beispielsweise aufgrund von Scheibenschlag, Temperatur und Betätigungsgeschwindigkeit bei der Zuordnung des tatsächlichen Ist-Bremsdrucks an den Fahrzeugrädern von dem für die Zwecke der Regelung gemessenen Druck zu minimieren, hat die Vorrichtung einen ersten Sensor zur Erzeugung eines quantitativen Signals bezüglich der relativen Betriebsposition der elektrischen Stelleinrichtung und einen zweiten Sensor zur Erzeugung eines qualitativen Signals bezüglich der ungefähren Betriebsposition der elektrischen Stelleinrichtung. Aus dem quantitativen und dem qualitativen Signal wird rechnerisch die momentane absolute Betriebsposition der elektrischen Stelleinrichtung ermittelt und daraus eine Bremszustandsgröße abgeleitet, die einem Ist-Zustand eines Bremsvorgangs entspricht.

Die DE 10 2008 012 874 A1 bezieht sich auf ein Verfahren zum Betrieb einer Fahrzeugbremsanlage mit hydraulisch betätigbaren Radbremsen und einem Druckversorgungssystem zur Beaufschlagung der Radbremsen mit Bremsdruck. Um die Gestaltungsmöglichkeiten für die Einstellung des Pedalgefühls einer Fahrzeugbremsanlage zu erhöhen, werden bei jeder Bremsbetätigung die Höhe des Fahrerbremswunsches ermittelt und in Abhängigkeit dieses Fahrerbremswunsches das Raumvolumen einer expandierbaren Vorrichtung verändert und die Elastizitäten einer Fahrzeugbremsanlage teilweise oder vollständig kompensiert.

Die WO 2005/014351 A1 betrifft eine Bremsbetätigungseinheit zur Betätigung einer Kraftfahrzeugbremsanlage, die Mittel zur Entkopplung einer kraftübertragenden Verbindung zwischen dem Bremspedal und dem Bremskraftverstärker in der Betriebsart "Brake-by-wire" aufweist. Offenbart wird auch die Erfassung der Lage des Kolbens, wobei eine Abweichung der Null-Lage des Kolbens, beispielsweise bei einer Leckage, erfasst wird, um einen Warnhinweis für den Fahrzeugführer zu erzeugen.

Die WO 2010/115646 A1 betrifft eine Steuervorrichtung für ein bremskraftverstärktes Bremssystem eines Fahrzeugs, das so gestaltet ist, dass ein bremskraftverstärktes Bremssystem auch bei einer eingeschränkten oder ausgefallenen Funktionsfähigkeit des Bremskraftverstärkers guten Fahrkomfort für den Fahrer gewährleistet. Hierzu wird das Größenverhältnis zwischen der Gesamtkraft und der Unterstützungskraft eines Bremskraftverstärkers berücksichtigt. Wird festgestellt, dass eine Zunahme der Unterstützungskraft bzw. eine Bewegung des Motors des Bremskraftverstärkers keine Steigerung der Gesamtbremskraft/des Drucks in dem Bremskreis bewirkt, so kann eine Leckage in der Hydraulik angenommen werden. In diesem Fall kann ein Test zur Prüfung der Hydraulik durchgeführt werden.

Als nachteilig erweist sich dabei, dass aufgrund der ermittelten Leckage zwar eine mögliche Fehlfunktion erkannt und gegebenenfalls dem Fahrzeugführer durch ein geeignetes Symbol entsprechend ein Hinweis bereitgestellt werden kann. Dieser Hinweis beschränkt sich jedoch oftmals auf die Aufforderung, eine Fachwerkstatt aufzusuchen. Es sind bisher keine Maßnahmen bekannt, um die möglichen nachteiligen Auswirkungen der Leckage bei Fortsetzung der Fahrt zu vermindern und dadurch die Fahrzeugsicherheit weiter zu verbessern.

Vor diesem Hintergrund liegt der Erfindung die Aufgabe zugrunde, ein Verfahren zu schaffen, durch das bei festgestellter Leckage mögliche Funktionsbeeinträchtigungen so gering wie möglich gehalten werden können.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren vorgesehen, bei dem die Leckage örtlich eingegrenzt und anschließend die Ansteuerung der Radbremsen dadurch optimiert wird, dass die Einlassventile der Radbremsen einzeln nacheinander geöffnet und die Einlassventile der übrigen Radbremsen geschlossen gehalten werden, um so die Leckage zumindest einer Radbremse zuzuordnen, und dass diese Radbremse im weiteren Betrieb, insbesondere Fahrbetrieb des Kraftfahrzeugs abgeschaltet wird. Im nachfolgenden Betrieb des Bremssystems wird dann das Einlassventil dieser Radbremse geschlossen gehalten. Im Gegensatz zu dem Stand der Technik, bei dem lediglich die Erkenntnis als Signal bereitgestellt wird, dass an einer nicht weiter bekannten Stelle des Bremssystems eine Leckage vorliegt, wird erfindungsgemäß der Ort der Leckage bestimmt, insbesondere also ihre Zuordnung zu einer Radbremse ermöglicht und durch eine entsprechende Anpassung des Fahrprogramms eine wesentliche Verbesserung der Fahreigenschaften erzielt. Während beim Stand der Technik ein Werkstattaufenthalt erstmals Klarheit über die von der Leckage betroffenen Abschnitte gestattet, die eine Untersuchung der gesamten Bremsanlage nach ausgetretener Bremsflüssigkeit voraussetzt, kann demgegenüber nunmehr erstmals der Ort der Leckage bereits während der Fahrt genauer diagnostiziert bzw. eingegrenzt werden. Die Kenntnis des Leckage-Ortes erlaubt es, während des fortgesetzten Betriebs des Kraftfahrzeugs geeignete Maßnahmen zu ergreifen.

Vorzugsweise erfolgt die vergleichende Betrachtung des Bremskraftverstärkers und des erzeugten Drucks in dem Bremskreis dadurch, dass das Verhältnis des Antriebsmoments des Antriebs gegenüber dem Druck in dem Bremskreis, des Antriebsmoments des Antriebs gegenüber der Stellposition des Antriebs und/oder der Stellposition des Antriebs gegenüber dem Druck in dem Bremskreis erfasst wird, um so bei unveränderter Stellposition des Antriebs eine Druckdifferenz im System oder bei einer Änderung der Stellposition des Antriebs bei unverändertem Druck im Bremskreis auf eine Leckage zu schließen. Selbstverständlich sind auch Messverfahren realisierbar, bei denen eine Änderung der Stellposition des Antriebs nicht zu der vorbestimmten Druckdifferenz im Bremskreis führt.

Beispielsweise kann bei einer Leckage an der rechten vorderen Radbremse nur diese Radbremse durch Schließen des Einlassventils gezielt von der Ansteuerung während des Bremsvorgangs getrennt werden. Bei einem Kraftfahrzeug mit Diagonalaufteilung ist dann das diagonal gegenüberliegende Hinterrad weiterhin voll bremsbar, sodass im Vergleich zum Stand der Technik drei Radbremsen anstelle von nur zwei Radbremsen wirksam sind und dadurch ein kürzerer Bremsweg realisierbar ist. Zudem ist ein weiterer Verlust an Bremsflüssigkeit ausgesch lossen.

Dabei erweist es sich auch als besonders praxisgerecht, wenn in einem ersten Schritt zunächst alle Einlassventile aller Radbremsen in einen geschlossenen Zustand gebracht werden und anschließend ein Messzyklus durchgeführt wird. Hierdurch kann die Diagnose der Leckage gegebenenfalls auf einen Bereich zwischen einem Zylinder, insbesondere einem Tandemhauptzylinder, und den Einlassventilen eingegrenzt werden. Je nach Ausgestaltung des Bremssystems kann hier auf einen der alternativen Bremskreisläufe verzichtet und der die Leckage aufweisende Bremskreis abgeschaltet werden. Ein weiterer Austritt von Bremsflüssigkeit wird dadurch wirkungsvoll vermieden. Sofern anderenfalls bei geschlossenen Einlassventilen keine Leckage mehr auftritt, ist die Leckage einem in Strömungsrichtung hinter den Einlassventilen liegenden Bereich des Bremssystems zuzuordnen.

Besonders vorteilhaft ist es darüber hinaus, wenn der Fahrzustand des Kraftfahrzeugs erfasst und der Messzyklus im Stillstand des Kraftfahrzeugs durchgeführt werden. Indem die Durchführung des Verfahrens als Bestandteil einer Routine regelmäßig, beispielsweise in Abhängigkeit der zurückgelegten Strecke oder der Betriebsstunden durchgeführt wird, kann das Auftreten einer Leckage sehr frühzeitig erkannt werden. Insbesondere wird diese bereits in einem Stadium feststellbar, in dem diese noch keinen Einfluss auf die Funktionsfähigkeit des Bremssystems hat, sodass der Fahrbetrieb in keiner Weise beeinträchtigt ist.

Obwohl das Verfahren auch während des gewöhnlichen Fahrbetriebs uneingeschränkt durchgeführt werden kann, ist es von Vorteil, wenn insbesondere mittels einer Sitzbelegungserkennung erfasst wird, ob sich Personen im Innenraum des Kraftfahrzeugs befinden und dass der Messzyklus ausschließlich durchgeführt wird, wenn alle Personen das Kraftfahrzeug verlassen haben. Hierdurch wird vermieden, dass die Durchführung des Messzyklus für den Fahrzeugführer wahrnehmbar wird und es dadurch zu subjektiv empfundenen Irritationen über den Fahrzustand des Kraftfahrzeugs kommen könnte.

Selbstverständlich kann nicht zuverlässig ausgeschlossen werden, dass die Leckage zugleich an unterschiedlichen Orten auftritt. Aus diesem Grunde ist es besonders vorteilhaft, wenn die Radbremse, der die Leckage zugeordnet ist, von einer Druckbeaufschlagung getrennt und ein weiterer Messzyklus durchgeführt werden, sodass die Messzyklen wiederholt werden, bis eine weitere Leckage ausgeschlossen werden kann.

Bei einer anderen, ebenfalls besonders praxisgerechten Abwandlung werden die Einlassventile der Radbremsen einzeln nacheinander geöffnet und die Auslassventile der übrigen Radbremsen geschlossen gehalten, um so die Leckage einer Radbremse zuzuordnen und gegebenenfalls auf einen Leitungsabschnitt zwischen dem Einlassventil und dem Auslassventil eingrenzen zu können, wobei das dieser Radbremse zugeordnete Einlassventil im nachfolgenden Betrieb des Bremssystems geschlossen gehalten wird.

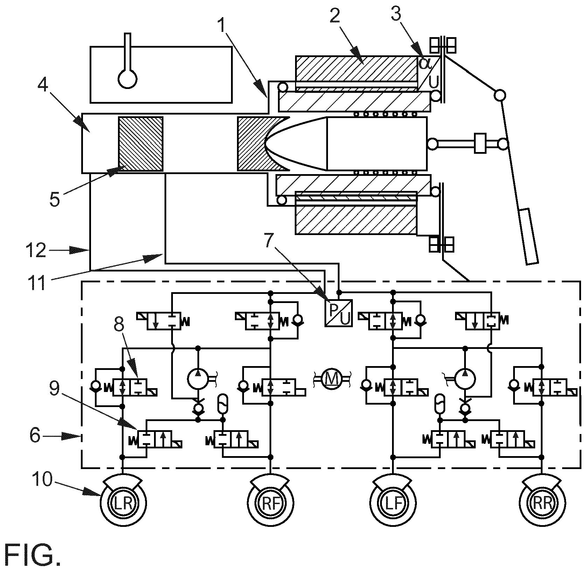

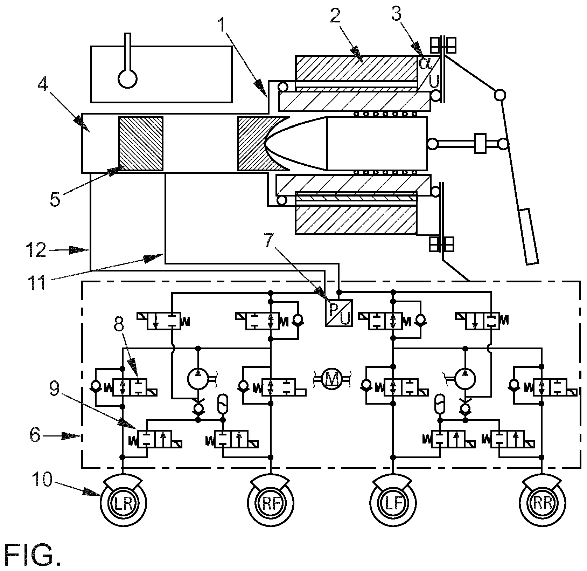

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt einen Schaltplan eines Bremssystems eines Kraftfahrzeugs. Das Bremssystem ist mit einem elektrischen Bremskraftverstärker 1 ausgestattet, welcher einen elektrisch kommutierten Elektromotor als Antrieb 2 aufweist. Bei diesem Antrieb 2 wird in dem dargestellten Ausführungsbeispiel ein Winkelsensor 3 zur Erfassung der jeweiligen Stellposition verwendet. Das Bremssystem umfasst weiterhin ein Schlupfregelsystem 6 mit einem Drucksensor 7, mit dem der hydraulische Druck in einem der beiden Bremskreise erfasst wird. Die beiden Bremskreise sind über einen Schwimmkolben 5 eines Tandemhauptzylinders 4 miteinander verbunden. Der Bremsdruck stimmt dadurch in beiden Bremskreisen überein. In einem gewöhnlichen Betriebszustand ist jeder Stellposition des Antriebs 2 ein bestimmter Druck in dem Bremskreis zugeordnet, sodass die Zuordnung durch eine Kennlinie eindeutig gekennzeichnet ist. Im Rahmen eines Prüfzyklus wird durch eine entsprechende Ansteuerung des Antriebs 2 ein bestimmtes Antriebsmoment erzeugt, dem entsprechend der Kennlinie ein bestimmter Druck zugeordnet ist. Während eines definierten Prüfzeitraums wird dieses Antriebsmoment konstant aufrechterhalten, sodass sich stationär ein konstanter Druck aufbaut. Falls es zu einer Leckage innerhalb des Bremskreises kommt, wird dies dadurch erkennbar, dass sich die Stellposition, insbesondere also der Drehwinkel des Antriebs 2 während des Prüfzeitraums ändert.

Im nachfolgenden Prüfverfahren wird der Ort der Leckage eingegrenzt. Hierzu wird zunächst das gesamte Bremssystem überprüft, indem alle jeweils einer Radbremse 10 zugeordneten Einlassventile 8 geschlossen werden. Anschließend wird der Druck im Bremskreis mittels des Bremskraftverstärkers 1 aufgebaut. Falls sich die Stellposition des Antriebs 2 ändert, liegt der Ort der Leckage in der Verbindung zwischen dem Tandemhauptzylinder 4 und den Einlassventilen 8. In der Praxis ist die Leckage in diesem Fall im Bereich der Leitungen 11, 12 zwischen dem Tandemhauptzylinder 4 und dem Schlupfregelsystem 6 zu suchen. Falls sich die Stellposition des Antriebs 2 nicht ändert und daher in diesem Abschnitt des Bremssystems eine Leckage ausgeschlossen werden kann, wird nachfolgend eine Eingrenzung der möglichen Leckage durch abwechselnde Druckbeaufschlagung jeweils einer Radbremse 10 vorgenommen, die so lange fortgesetzt wird, bis erneut eine Leckage auftritt, die dann der entsprechenden Radbremse eindeutig zugeordnet werden kann. Hierzu wird lediglich das Einlassventil 8 jeweils einer Radbremse 10 geöffnet, während die übrigen Einlassventile 8 geschlossen gehalten werden. Der Druck des Bremskreises wirkt somit lediglich auf eine einzige Radbremse 10. Um den Ort der Leckage weiter einzugrenzen, können zuvor noch die jeweiligen Auslassventile 9 nacheinander geschlossen und die Druckprüfung durchgeführt werden. Sobald die Leckage einer oder mehreren Radbremsen 10 eindeutig zugeordnet werden kann, wird diese von dem weiteren Bremsbetrieb getrennt.

### Bezugszeichenliste

- 1: Bremskraftverstärker
- 2: Antrieb
- 3: Winkelsensor
- 4: Tandemhauptzylinder
- 5: Schwimmkolben
- 6: Schlupfregelsystem
- 7: Drucksensor
- 8: Einlassventile
- 9: Auslassventil
- 10: Radbremse
- 11: Leitung
- 12: Leitung

## Patentansprüche

1. Verfahren zur Steuerung eines mit einem Bremskraftverstärker (1), mit Radbremsen und mit jeweils einer Radbremse zugeordneten Einlassventilen ausgestatteten Bremssystems eines Kraftfahrzeugs, bei dem das Antriebsmoment und/oder die Stellposition eines Antriebs (2) des Bremskraftverstärkers (1) sowie der so erzeugte Druck in dem Bremskreis des Bremssystems erfasst werden und durch eine vergleichende Betrachtung, insbesondere unter Berücksichtigung in einer Datenbank abgelegter Werte, auf eine Leckage in dem Bremskreis geschlossen wird, **dadurch gekennzeichnet, dass** die Einlassventile (8) der Radbremsen (10) einzeln nacheinander geöffnet und die Einlassventile (8) der übrigen Radbremsen (10) geschlossen gehalten werden, um so die Leckage zumindest einer Radbremse (10) zuzuordnen, und dass diese Radbremse (10) im weiteren Betrieb, insbesondere Fahrbetrieb des Kraftfahrzeugs abgeschaltet wird.

2. Verfahren nach Anspruch 1, **dadurch gekennzeichnet, dass** das Einlassventil (8) der Radbremse (10), welcher die Leckage zugeordnet ist, im nachfolgenden Betrieb des Bremssystems geschlossen gehalten wird.

3. Verfahren nach den Ansprüchen 1 oder 2, **dadurch gekennzeichnet, dass** das Verhältnis des Antriebsmoments des Antriebs (2) gegenüber dem Druck in dem Bremskreis, des Antriebsmoments des Antriebs (2) gegenüber der Stellposition des Antriebs (2) und/oder der Stellposition des Antriebs (2) gegenüber dem Druck in dem Bremskreis erfasst wird.

4. Verfahren nach zumindest einem der vorangehenden Ansprüche, **dadurch gekennzeichnet, dass** die zumindest eine Radbremse (10), welcher die Leckage zugeordnet ist, durch Schließen des Einlassventils (8) von der Ansteuerung während des Bremsvorgangs getrennt wird.

5. Verfahren nach zumindest einem der vorangehenden Ansprüche, **dadurch gekennzeichnet, dass** in einem ersten Schritt zunächst alle Einlassventile (8) aller Radbremsen (10) in einen geschlossenen Zustand gebracht werden und anschließend ein Messzyklus durchgeführt wird.

6. Verfahren nach zumindest einem der vorangehenden Ansprüche, **dadurch gekennzeichnet, dass** der Fahrzustand des Kraftfahrzeugs erfasst und der Messzyklus im Stillstand des Kraftfahrzeugs durchgeführt werden.

7. Verfahren nach zumindest einem der vorangehenden Ansprüche, **dadurch gekennzeichnet, dass** insbesondere mittels einer Sitzbelegungserkennung erfasst wird, ob sich Personen im Innenraum des Kraftfahrzeugs befinden, und dass der Messzyklus ausschließlich durchgeführt wird, wenn alle Personen das Kraftfahrzeug verlassen haben.

8. Verfahren nach zumindest einem der vorangehenden Ansprüche, **dadurch gekennzeichnet, dass** die Radbremse (10), der die Leckage zugeordnet ist, von einer Druckbeaufschlagung getrennt und ein weiterer Messzyklus durchgeführt werden.

9. Verfahren nach zumindest einem der vorangehenden Ansprüche, **dadurch gekennzeichnet, dass** die Auslassventile (9) der Radbremsen (10) einzeln nacheinander geöffnet und die Auslassventile (9) der übrigen Radbremsen (10) geschlossen gehalten werden.

## Claims

1. Method for controlling a brake system, which is equipped with a brake force booster (1) with wheel brakes and with inlet valves assigned to in each case one wheel brake, of a motor vehicle, in which method the drive torque and/or the actuation position of a drive (2) of the brake force booster (1) and the pressure thus generated in the brake circuit of the brake system are detected and, by means of a comparative consideration, in particular taking into consideration the values stored in a database, a leak in the brake circuit is inferred, **characterized in that** the inlet valves (8) of the wheel brakes (10) are opened individually in succession, and the inlet valves (8) of the other wheel brakes (10) are held closed, in order to thereby assign the leak to at least one wheel brake (10), and **in that** said wheel brake (10) is deactivated during the further operation, in particular traction operation of the motor vehicle.

2. Method according to Claim 1, **characterized in that** the inlet valve (8) of the wheel brake (10) to which the leak is assigned is held closed during the subsequent operation of the brake system.

3. Method according to Claims 1 or 2, **characterized in that** the ratio of the drive torque of the drive (2) to the pressure in the brake circuit, of the drive torque of the drive (2) to the actuation position of the drive (2) and/or of the actuation position of the drive (2) to the pressure in the brake circuit is detected.

4. Method according to at least one of the preceding claims, **characterized in that** the at least one wheel brake (10) to which the leak is assigned is separated from the actuation during the braking process by closure of the inlet valve (8).

5. Method according to at least one of the preceding claims, **characterized in that**, in a first step, initially all of the inlet valves (8) of all of the wheel brakes (10) are placed into a closed state, and a measurement cycle is subsequently performed.

6. Method according to at least one of the preceding claims, **characterized in that** the driving state of the motor vehicle is detected, and the measurement cycle is performed when the motor vehicle is at a standstill.

7. Method according to at least one of the preceding claims, **characterized in that**, in particular by means of a seat occupancy detection means, it is detected whether persons are situated in the interior compartment of the motor vehicle, and **in that** the measurement cycle is performed only when all persons have exited the motor vehicle.

8. Method according to at least one of the preceding claims, **characterized in that** the wheel brake (10) to which the leak is assigned is separated from an application of pressure, and a further measurement cycle is performed.

9. Method according to at least one of the preceding claims, **characterized in that** the outlet valves (9) of the wheel brakes (10) are opened individually in succession, and the outlet valves (9) of the other wheel brakes (10) are held closed.

## Revendications

1. Procédé de commande d'un système de freinage d'un véhicule automobile, équipé d'un servofrein (1), de freins de roue et de vannes d'entrée respectivement associées à un frein de roue, selon lequel le couple d'entraînement et/ou la position réglée d'un mécanisme d'entraînement (2) du servofrein (1) ainsi que la pression ainsi générée dans le circuit de freinage du système de freinage sont détectés, et la présence d'une fuite dans le circuit de freinage est conclue par une observation comparative, notamment en tenant compte de valeurs stockées dans une base de données, **caractérisé en ce que** les vannes d'entrée (8) des freins de roue (10) sont ouvertes individuellement les unes après les autres et les vannes d'entrée (8) des freins de roue (10) restants sont maintenues fermées afin d'associer ainsi la fuite à au moins un frein de roue (10), et **en ce que** ce frein de roue (10) est mis hors circuit dans la suite du fonctionnement, notamment en régime de déplacement du véhicule automobile.

2. Procédé selon la revendication 1, **caractérisé en ce que** la vanne d'entrée (8) du frein de roue (10) auquel est associée la fuite est maintenue fermée dans la suite du fonctionnement du système de freinage.

3. Procédé selon l'une des revendications 1 ou 2, **caractérisé en ce que** le rapport entre le couple d'entraînement du mécanisme d'entraînement (2) et la pression dans le circuit de freinage, entre le couple d'entraînement du mécanisme d'entraînement (2) et la position réglée du mécanisme d'entraînement (2) et/ou la position réglée du mécanisme d'entraînement (2) et la pression dans le circuit de freinage est détecté.

4. Procédé selon au moins l'une des revendications précédentes, **caractérisé en ce que** l'au moins un frein de roue (10) auquel est associée la fuite est isolé de la commande pendant l'opération de freinage par fermeture de la vanne d'entrée (8).

5. Procédé selon au moins l'une des revendications précédentes, **caractérisé en ce que** dans une première étape, toutes les vannes d'entrée (8) de tous les freins de roue (10) sont tout d'abord amenées dans un état fermé et ensuite un cycle de mesure est exécuté.

6. Procédé selon au moins l'une des revendications précédentes, **caractérisé en ce que** l'état de déplacement du véhicule automobile est détecté et le cycle de mesure est exécuté à l'arrêt du véhicule automobile.

7. Procédé selon au moins l'une des revendications précédentes, **caractérisé en ce qu'**une détection de la présence de personnes dans l'habitacle du véhicule automobile est effectuée, notamment au moyen d'une reconnaissance de l'occupation des sièges, et **en ce que** le cycle de mesure n'est exécuté que lorsque toutes les personnes ont quitté le véhicule automobile.

8. Procédé selon au moins l'une des revendications précédentes, **caractérisé en ce que** le frein de roue (10) auquel est associée la fuite est isolé d'une mise en pression et un cycle de mesure supplémentaire est exécuté.

9. Procédé selon au moins l'une des revendications précédentes, **caractérisé en ce que** les vannes de sortie (9) des freins de roue (10) sont ouvertes l'une après l'autre et les vannes de sortie (9) des freins de roue (10) restants sont maintenues fermées.
